Europäisches Patentamt

European Patent Office

Office européen des brevets

(11) Veröffentlichungsnummer : **0 035 179**
**B1**

# (12) EUROPÄISCHE PATENTSCHRIFT

(45) Veröffentlichungstag der Patentschrift :
13.06.84

(21) Anmeldenummer : 81101191.5

(22) Anmeldetag : 19.02.81

(51) Int. Cl.³ : **H 02 G 15/013, H 02 G 15/10**

(54) **Muffenkopf aus schrumpfbarem Material für den seitlichen Abschluß von Kabelmuffen.**

(30) Priorität : 28.02.80 DE 3007604

(43) Veröffentlichungstag der Anmeldung :
09.09.81 Patentblatt 81/36

(45) Bekanntmachung des Hinweises auf die Patenterteilung : 13.06.84 Patentblatt 84/24

(84) Benannte Vertragsstaaten :
AT BE CH DE FR GB IT LI NL SE

(56) Entgegenhaltungen :
DE-A- 2 005 307
DE-A- 2 731 578

(73) Patentinhaber : SIEMENS AKTIENGESELLSCHAFT
Berlin und München Wittelsbacherplatz 2
D-8000 München 2 (DE)

(72) Erfinder : Kunze, Dieter, Dipl.-Ing.
Rosenstrasse 10
D-8027 Neuried (DE)
Erfinder : Bauer, Josef, Ing. grad.
Wittelsbacher Strasse 24
D-8034 Germering (DE)

## Beschreibung

Die Erfindung betrifft einen Muffenkopf aus schrumpfbarem Material für den seitlichen Abschluß von Kabelmuffen mit als Kabeleinführungsstutzen ausgebildeten Kabeleinführungsöffnungen, wobei die Kabeleinführungsstutzen jeweils eine Trennfuge entlang einer Mantellinie aufweisen.

Derartige Kabelmuffen sind bereits bekannt und in der DE-OS 27 31 578 beschrieben. Dort wird die Kabelmuffe mit einem geteilten metallischen Stützmantel beidseitig mit Muffenköpfen abgeschlossen, die aus wärmeschrumpfbarem Material bestehen. Die als Einstülpung ausgebildeten Kabeleingänge weisen eine Trennfuge zum äußeren Umfang hin auf, so daß hierdurch auch ungeschnittene Kabel eingelegt werden können. Im Bereich der Trennfuge ist auf jeder Seite ein Steg ausgebildet, und diese beiden Stege werden von einem Stützring hintergriffen. Anschließend werden die Einstülpungen durch Wärmezufuhr auf die eingeführten Kabel aufgeschrumpft. Da nun bei dieser gleichförmigen Aufschrumpfung auch das Gebiet der Trennfuge geschrumpft werden muß, können sich im Bereich der Trennfuge Unregelmäßigkeiten ergeben. Diese Unregelmäßigkeiten, die besonders beim Aufschrumpfen von Kabeln kleineren Durchmessers auftreten, führen dazu, daß im Auflagegebiet Undichtigkeiten entstehen. Dies ist eine Folge der in Umfangsrichtung gleichmäßig wirkenden Schrumpfkräfte, die versuchen, die Trennfuge auseinanderzuziehen. Auf diese Weise könnte sich entlang einer Mantellinie des Kabels und der Trennfuge ein Spalt ausbilden, der zur Undichtigkeit führt. Besonders gefährdet ist dabei der Zwickelbereich entlang der Trennfuge. Weitere Probleme ergeben sich durch das Aufweitungsverfahren vor dem Schrumpfen. Die Kabeleinführungsstutzen werden durch Einpressen eines konisch ausgebildeten Dornes geweitet. Hierdurch ergeben sich jedoch axiale Verschiebungen durch die auftretenden Reibkräfte, die in umgekehrter Richtung beim Aufschrumpfen der Kabelstutzen wieder wirksam werden. Durch diese axialen Verschiebungen ergeben sich ebenfalls Dichtungsprobleme.

Der vorliegenden Erfindung lag nun die Aufgabe zugrunde, die Muffenköpfe bei Kabelmuffen aus schrumpfbarem Material nach der eingangs erwähnten Art so auszubilden, daß Trennfugenbereiche entlang einer Mantellinie der Kabeleinführungsstutzen beim Aufschrumpfen auf die eingeführten Kabel möglichst unbeeinflußt bleiben, wobei besonders axiale Verschiebungen der Kabelstutzen zu vermeiden sind, um die beim Schrumpfvorgang auftretenden Dichtungsprobleme infolge von Schrumpfkräften zu verhindern.

Die gestellte Aufgabe wird nun mit Muffenköpfen gemäß der Erfindung dadurch gelöst, daß die Kabeleinführungsstutzen vor dem Schrumpfen in radialer Richtung von der Trennfuge ausgehend und kontinuierlich zunehmend so aufgeweitet sind, daß die längs beliebiger Mantellinien der Kabeleinführungsstutzen befindlichen Flächenteile nahezu keine axiale Verschiebungen gegenüber dem ungeweiteten Zustand aufweisen und daß die Stirnfläche des Muffenkopfes eine durch die Aufweitung bewirkte Auffaltung aufweist.

Um nun einen derartigen Muffenkopf mit den genannten Merkmalen herstellen zu können, muß außerdem ein entsprechendes Verfahren entwickelt werden. Ein erstes Verfahren zur Herstellung eines Muffenkopfes nach den genannten Bedingungen wird dadurch verwirklicht, daß der Muffenkopf über einer Aussparung angeordnet wird, wobei die Aussparung so groß gewählt ist, daß eine Verformung der Stirnfläche ungehindert erfolgen kann, daß die einseitige, in radialer Richtung von der Trennfuge ausgehende Aufweitung der Kabeleinführungsstutzen durch Einführung eines einseitig kegelförmig ausgebildeten Dornes in die Kabeleinführungsöffnungen erfolgt, wobei der Dorn auf der zu weitenden Seite zusätzlich vom Ende her in seinem Durchmesser zunimmt und daß der Dorn auf Mitteln zur Verhinderung der Reibkraftübertragung geführt wird. Der Dorn kann nun zur Verminderung der Reibkräfte entweder entlang gleitfähiger Fäden, die an der Innenwandung der Kabeleinführungsstutzen angeordnet sind, geführt werden oder in ein entfernbares Lamellensystem, das ebenfalls an der Innenwandung der Kabeleinführungsstutzen angeordnet ist, eingebracht werden.

Ein weiteres Verfahren zur Herstellung eines Muffenkopfes nach den genannten Bedingungen besteht darin, daß der Muffenkopf mit seinem Stutzenrand an einer verstellbaren Blende als Anschlag angeordnet ist, daß die einseitige, in radialer Richtung von der Trennfuge ausgehende Aufweitung der Kabeleinführungsstutzen durch Einführung eines einseitig kegelförmig ausgebildeten Dornes in die Kabeleinführungsöffnungen erfolgt, wobei der Dorn auf der zu weitenden Seite zusätzlich vom Ende her in seinem Durchmesser zunimmt, wobei die verstellbare Blende an den Kabeleinführungsöffnungen der Kabeleinführungsstutzen dem sich ändernden Durchmesser des einfahrenden Dornes angepaßt wird, um eine axiale Verschiebung des Stutzens zu verhindern.

Bei den bisherigen Muffenköpfen mit gleichmäßiger Aufweitung und axialer Verschiebung, die sich durch das Herstellungsverfahren ergab, stellte sich während des Schrumpfvorganges wiederum eine axiale Verschiebung und eine Beeinflussung der Trennfugenbereiche ein. Die Aufweitung wird bei derartigen Muffenköpfen durch Einschieben eines kegeligen Dornes in die Kabeleinführungsöffnung oder durch Unterdruck erreicht, wobei die Stirnflächen der Muffenköpfe warmgehalten werden. Dies hat jedoch zur Folge, daß die Kabeleinführungsstutzen infolge der axial gerichteten Verformungskräfte einen ungleichmäßigen, nicht rechtwinklig zur Achse verlaufenden Rand aufweisen. Diese Ränder werden schließlich senkrecht zur Achse beschnitten, was zur Folge hat, daß sich die Kabelstutzenränder beim Aufschrumpfen auf ein Kabel schräg nach innen ziehen und zwar um so mehr, je kleiner der Kabeldurchmesser ist. Diese Vorgänge erhöhen jedoch die Dichtungsprobleme besonders im Trennfugenbereich von geschlitzten Kabeleinführungsstutzen. Es galt nun, diese Mängel beim Anmeldungsgegenstand durch ein geeignetes Fertigungsverfahren, bzw. Aufweitungsverfahren zu beheben. Ein besonderer vorteil der Erfindung liegt nun darin, daß die axial wirkenden Schrumpfkräfte durch besondere Maßnahmen unterbunden werden, so daß die Verformung beinahe nur in radialer Richtung erfolgt. Das heißt, daß die längs beliebiger Mantellinien der Kabeleinführungsstutzen befindlichen Flächenteile kaum axiale Verschiebungen gegenüber dem ungeweiteten Zustand erhalten. Bei diesem Aufweitungsvorgang bildet sich jedoch auf der Stirnseite des Muffenkopfes eine Auffaltung, in der das beim Aufweiten aus der Stirnfläche verdrängte Material aufgenommen wird. Im Bedarfsfall schrumpft nun der Kabeleinführungsstutzen in radialer Richtung zusammen, wobei nun, im Gegensatz zu den bisherigen Methoden, keine Axialverschiebung der Kabelstutzenwandung erhält. Dies hat zusätzlich den besonderen Vorteil, daß die Schrumpfkräfte ausschließlich in radialer Richtung auf den Kabelmantel wirken. Es bildet sich lediglich die Auffaltung in der Stirnfläche zurück, wobei diese Rückbildung vom Schrumpfungsgrad und damit vom Durchmesser des eingeführten Kabels abhängt.

Ein besonderer Vorteil an der Erfindung ist nun darin zu sehen, daß diese Aufweitungsverfahren bei entlang einer Mantellinie geschlitzten Kabeleinführungsstutzen von Muffenköpfen aus schrumpfbarem Material gewährleisten, daß der Bereich der Trennfugen während des Schrumpfvorgangs unverändert bleibt. Das Verschlußsystem bleibt somit auch in seiner Form unverändert. Dies wird nun dadurch erreicht, daß die Kabeleinführungsstutzen des Muffenkopfes nur einseitig geweitet bzw. gereckt sind, und zwar so, daß im Trennfugenbereich · überhaupt keine Aufweitung erfolgt und von hier ausgehend nur allmählich mit dem Aufweiten begonnen wird. Damit ergibt sich die größte Aufweitung des Kabeleinführungsstutzens auf der der Trennfuge gegenüber liegenden Seite des Kabeleinführungsstutzens. Das bedeutet für den Schrumpfvorgang, daß der Schrumpfungsprozeß im wesentlichen in einem von der Trennfuge mehr oder weniger abgelegenen Bereich erfolgt, ohne dieselbe zu belasten. Damit wird verhindert, daß die Dichtungsflächen in der Trennfuge zwischen den Kabeleinführungsöffnungen und der Außenwandung des Muffenkopfes Veränderungen erfahren, die später während des Schrumpfvorganges zu Undichtigkeiten führen.

Zusätzlich ist von Vorteil, daß auch die axiale Verschiebung der Flächenteile der Kabeleinführungsstutzen unterbleibt.

Die Ausbildung eines Muffenkopfes sowie die geeigneten Verfahren zur Herstellung eines solchen werden nun im folgenden anhand von vier Figuren näher erläutert.

Figur 1 zeigt die Stirnfläche eines Muffenkopfes und in

Figur 2 wird ein axialer Schnitt durch den Muffenkopf dargestellt.

Figur 3 verdeutlicht ein Aufweitungsverfahren mit radial beweglichen Lamellen, während in

Figur 4 ein Aufweitungsverfahren mit einem auf Mitteln zur Verhinderung der Reibkraftübertragung eintreibbaren Dorn erläutert wird.

Figur 5 zeigt die Wirkungsweise einer verstellbaren Blende beim Aufweitungsverfahren.

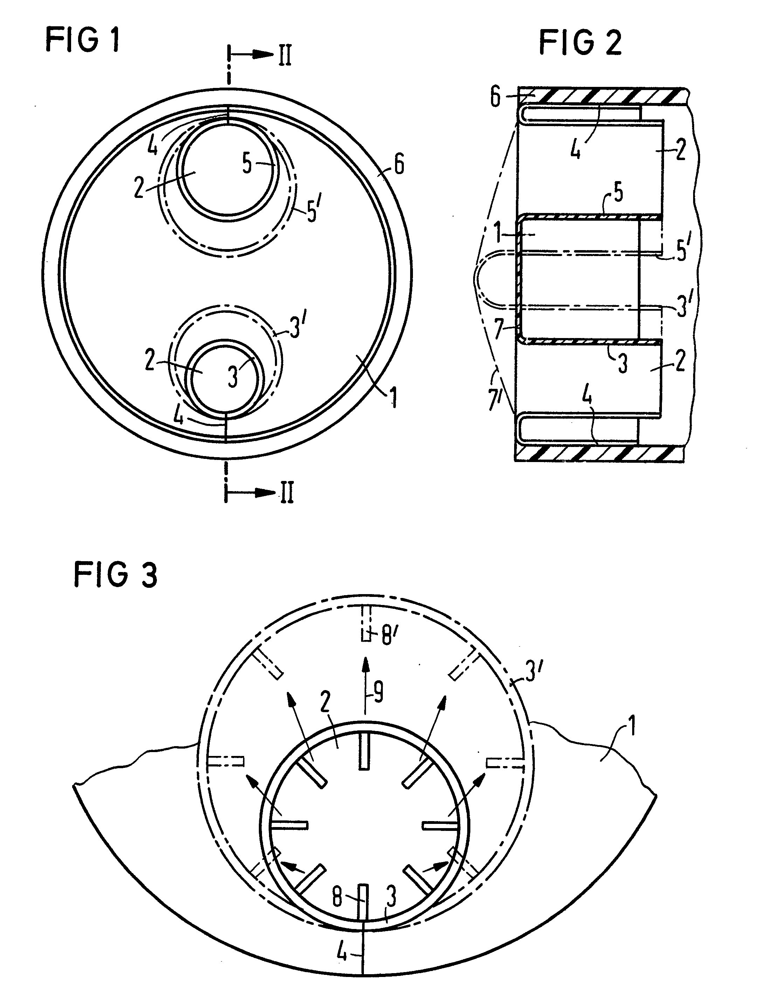

Die Figur 1 zeigt nun als Beispiel einen Muffenkopf 1 mit einseitig aufgeweiteten Kabeleinführungsstutzen gemäß der Erfindung in einer Ansicht vom Inneren einer Kabelmuffe mit geschlitztem Muffenrohr 6 nach außen auf dessen Stirnseite. Da die in der Stirnseite des Muffenkopfes 1 befindlichen Kabeleinführungsöffnungen 2 als nach innen ausgestülpte Kabeleinführungsstutzen 3, 5 bzw. 3', 5' ausgebildet sind, ist diese Darstellungsweise zweckmäßig, weil hierbei die Zustände vor und nach dem Schrumpfen dargestellt werden können. Dabei ist die geweitete Ausbildung der Kabeleinführungsstutzen vor dem Schrumpfen in gestrichelter Form mit den Kennziffern 3' und 5' bezeichnet, während die Endanordnungen der Kabeleinführungsstutzen nach dem Schrumpfen in ausgezogener Form mit den Kennzeichnungsziffern 3 bzw. 5 dargestellt sind. Da in diesem Fall in den Muffenkopf auch ungeschnittene Kabel eingeführt werden sollen, müssen die Kabeleinführungsöffnungen 2 von außen her durch die Außenwandung des Muffenkopfes 1 zugänglich sein und dies erfolgt durch Trennfugen 4, die an der dünnsten Stelle zwischen der Muffenkopfwandung und den Kabeleinführungsöffnungen 2 angeordnet sind. Durch die Darstellung von geweitetem und geschrumpftem Zustand in einer Figur läßt sich weiter erkennen, daß die Bereiche der Trennfugen 4 durch den Schrumpfvorgang nicht verändert werden. Dies wird durch einseitiges Aufweiten erreicht, wie die gestrichelten Ausführungsformen 3' bzw. 5' zeigen. Bei diesem Aufweitungsvorgang dürfen jedoch nur radial wirkende Kräfte wirksam sein, damit die gestellten Forderungen erfüllt werden. Bei dieser Verformung wölbt sich die Muffenkopfstirnfläche 7 des Muffenkopfes 1 zu einer Auffaltung 7' auf, wie aus Figur 2 deutlich wird. Diese Figur 2 zeigt den Muffenkopf 1 innerhalb des Muffenrohres 6 in einer Schnittdarstellung, wie in Figur 1 durch II-II angedeutet. Dieser Schnitt ist dabei so geführt, daß er in die Bereiche der Trennfugen 4 trifft, da hier sowieso eine Trennlinie vorgegeben ist. Die Figur 2 verdeutlicht nun die Verformung durch das Aufweiten bzw. den Reckvorgang sehr anschaulich. Dabei läßt sich erkennen, daß die Verschiebung der Innenwandung von der nach dem Schrumpfen wieder einzunehmende Endform der Kabeleinführungsstutzen 3 bzw. 5 in die aufgeweitete Form 3' bzw. 5' ausschließlich in radialer Richtung vorgenommen wird und daß die hierbei auftretende Materialverschiebung der ursprünglichen Muffenkopfstirnfläche 7 zur Auffaltung 7' führt. Dabei werden keine Flächenteile entlang von parallel zur Achse verlaufenden Mantellinien der Kabeleinführungsstutzen 3 bzw. 5 in axialer Richtung verschoben, so daß eine Verschiebung in umgekehrter Richtung auch beim Schrumpfvorgang durch die Rückbildung infolge des Formgedächtnisses des schrumpfbaren Materials nicht erfolgen kann. Je nach Durchmesser der einzuführenden Kabel wird dann diese Auffaltung 7' während des Schrumpfvorgangs wieder in die ursprüngliche Form der Stirnfläche 7 zurückgehen. Eine axiale Verschiebung der Wandungen der Kabeleinführungsstutzen im Bereich der Kabelauflage erfolgt hierbei jedoch nicht. In dieser Darstellung wird auch deutlich, daß die Randbereiche um die Trennfugen 4 herum vom Schrumpfvorgang unbeeinflußt bleiben, so daß die Verschlußbereiche auch keinerlei Deformationen erfahren.

Anhand von Figur 3 wird nun ein Verfahren beschrieben, durch das die radiale Aufweitung der Kabeleinführungstutzen erreicht wird. Vom Muffenkopf 1 wird wegen der besseren Übersichtlichkeit hier nur ein Teil mit einem Kabeleinführungsstutzen 3 dargetellt. In diesem Kabeleinführungsstutzen 3 in seiner ursprünglichen Form wird nun ein Lamellensystem eingebracht, das sich zunächst gleichmäßig an die Innenwandung des Kabeleinführungsstutzens 3 anlegt. Anschließend erfolgt Wärmezufuhr, so daß das Material des Kabeleinführungsstutzens 3 erweicht. Wenn dieser Zustand erreicht ist, werden die Lamellen 8 in radialer Richtung aufgespreizt. Dabei erfolgt diese Aufspreizung der Lamellen 8 in diesem Falle nicht gleichmäßig weit, da es sich um eine einseitige Aufspreizung handelt. Die im Bereich der Trennfuge 4 eingebrachte Lamelle 8 bleibt bei diesem Vorgang sogar in ihrer Lage, damit voraussetzungsgemäß hier keine Veränderung eintritt, während die anderen Lamellen 8 den eingezeichneten Pfeilen 9 entsprechend in ihre Endlage 8' so weit bewegt werden, bis der Kabeleinführungsstutzen 3' seine erforderliche geweitete Form erreicht hat. Nun erfolgt die Abkühlung, so daß diese Form bis zum endgültigen Gebrauch beibehalten werden kann. Die Lamellen 8 werden schließlich entfernt. Bei Bedarf wird schließlich erneut Wärme zugeführt, und die Schrumpfung der Kabeleinführungsstutzen erfolgt der Aufspreizung entsprechend ebenfalls ungleichmäßig. Der Endzustand ist dann erreicht, wenn das eingeführte Kabel fest umschlossen ist.

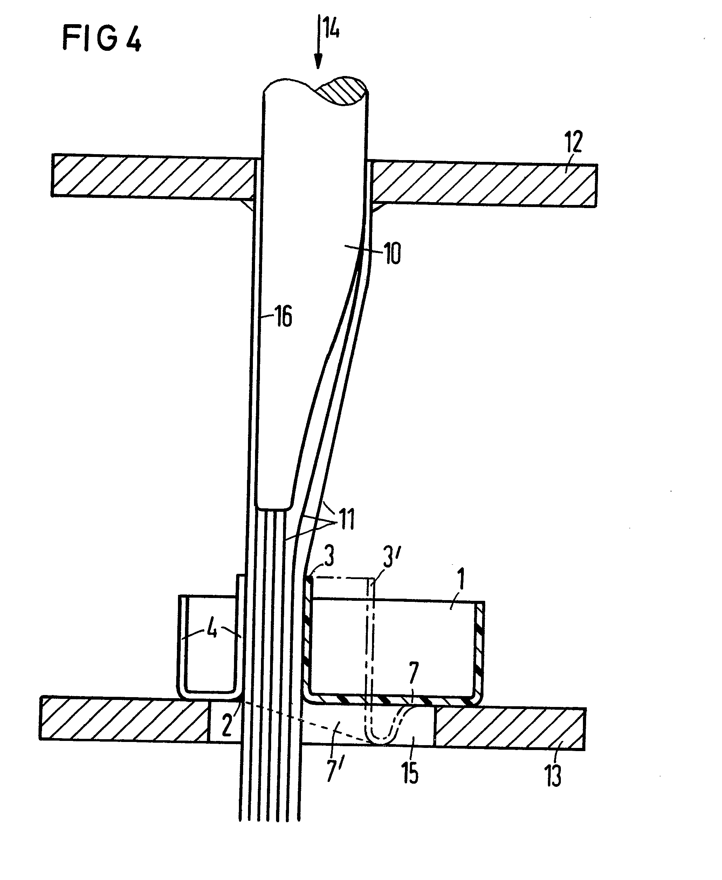

Ein anderes Verfahren, das zum gleichen Ergebnis führt, wird in Figur 4 gezeigt. Hier wird, wie bisher, ein konisch ausgebildeter Dorn 10 nach Erwärmung des schrumpfbaren Kabeleinführungsstutzens in Pfeilrichtung 14 in die Kabeleinführungsöffnung 2 des Muffenkopfes 1 eingeführt. Der Muffenkopf 1 ist hierbei auf einem Gegenlager 13 über einer Aussparung 15 angeordnet, wobei die Aussparung 15 so groß gewählt werden muß, daß die Verformung der Stirnfläche 7 des Muffenkopfes 1 ungehindert erfolgen kann. Ohne Zusätze würde hier im wesentlichen eine axiale Verschiebung der Wandungen des Kabeleinführungsstutzens 3 erfolgen, wie dies bisher bekannt ist. Zur Verhinderung der axialen Verschiebung kann zum Beispiel auch eine anpaßbare Blende angeordnet sein, die sich je nach Eindringtiefe des konisch sich erweiternden Dornes entsprechend nach der Art einer Irisblende öffnet. Bei einem solchen Verfahren gemäß der Erfindung wird diese axiale Verschiebung der Wandung durch Mittel 11 zur Verhinderung der Reibkraftübertragunbg, die zwischen der Wandung des Kabeleinführungsstutzens 3 und dem einzuführenden Dorn 10 geführt werden, verhindert. Solche Mittel 11 sind zum Beispiel als Zwischenlage aus gleitfähigen Fäden oder dergleichen ausgebildet. Hierfür eignen sich zum Beispiel Stahlfäden, die an der Führung 12 für den Dorn 10 befestigt sind und in die Kabeleinführungsöffnung 2 eingeführt werden, bevor der Dorn 10 eingreift. Wird nun der Dorn 10 abgesenkt, so wird er nun auf den Stahlfäden geführt, so daß eine Übertragung der Reibkräfte in axialer Richtung auf die Wandung des Kabeleinführungsstutzens nicht erfolgen kann. Auf solche Weise erfolgt nur die radiale Verformung bis zur geweiteten Form des Kabeleinführungsstutzens 3', wobei die entsprechende Materialverschiebung der Stirnfläche 7 zur Aufweitung 7' führt. Eine Verschiebung der Flächenteile entlang von Mantellinien des Kabeleinführungsstutzens in axialer Richtung erfolgt demnach im Kabelauflagebereich nicht. Aus der Darstellung geht weiterhin hervor, daß der Bereich der Trennfuge 4 wiederum unbeeinflußt bleibt vom Vorgang des Aufweitens wie auch des Schrumpfens. Dies ist auch eine Folge der Ausbildung des Dornes 10, der einseitig konisch zulaufend ausgebildet ist. Diese Ausbildung führt zur kontinuierlichen Aufweitung des erwärmten Kabeleinführungsstutzens 3. Diese einseitige Ausbildung des Dornes 10 wird aus der Figur 4 sehr deutlich, wobei zu erkennen ist, daß nur eine Mantellinie 16 gerade und parallel zur Achse verläuft, während alle anderen durch die kegelige und konische Ausbildung mehr oder weniger gekrümmt sind. Dieser Dorn 10 wird nun so in die Kabeleinführungsöffnung 2 eingeführt, daß diese gerade Mantellinie 16 fluchtend die Innenwandung des Kabeleinführungsstutzens 3 entlang der Trennfuge 4 auf der aus Mittel 11 zur Verhinderung der Reibkraftübertragung bestehenden Zwischenlage gleitend berührt. Dadurch wird gewährleistet, daß dieser Bereich beim Aufweiten nicht verformt wird, so daß die Ursprungsform der Trennfuge 4 und damit auch des Dichtungssystems erhalten bleibt. Dagegen werden die weiteren Bereiche des Kabeleinführungsstutzens 3 entsprechend des zunehmenden Durchmessers, sowie der einseitigen Erweiterung des Dornes 10 ungleichmäßig, jedoch kontinuierlich aufgeweitet.

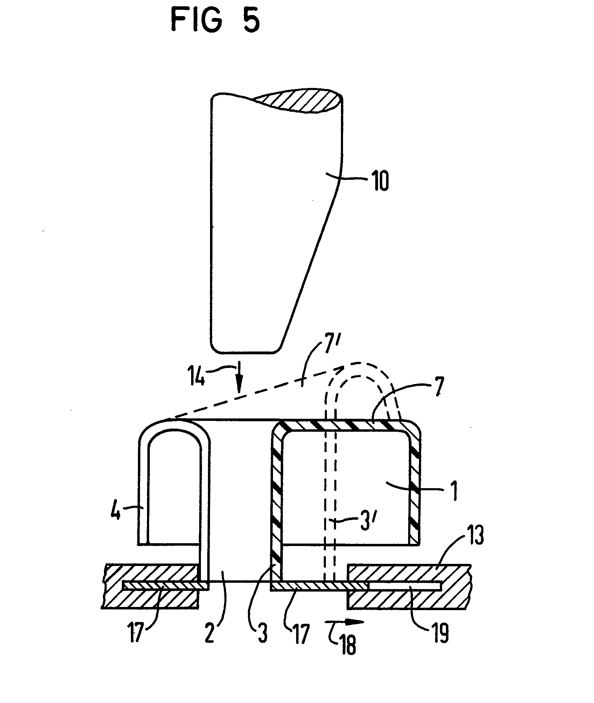

In Figur 5 wird ein Aufweitungsverfahren dargestellt, bei dem eine verstellbare Blende 17 Anwendung findet. Es wird hier ähnlich wie beim Aufweitungsverfahren nach Figur 4 ein Dorn 10 in Pfeilrichtung 14 in die Kabeleinführungsöffnung 2 des Kabeleinführungsstutzens 3 eines Muffenkopfes 1 eingeführt. Doch wird in diesem Falle die axiale Verschiebung der Flächenteile des Kabeleinführungsstutzens durch eine verstellbare Blende 17 verhindert, so daß sich infolge der Materialverdrängung wiederum eine Auffaltung 7' der ursprünglichen Stirnfläche 7 bildet. Die Aufweitung der Kabeleinführungsöffnung 2 erfolgt somit ebenfalls nur in radialer Richtung vom ungeweiteten Zustand in den geweiteten Zustand des Kabeleinführungsstutzens 3'. Die Blende 17, die vorteilhafterweise als Irisblende ausgebildet ist, dient als Anschlag für den Stutzenrand. Während des Aufweitungsvorganges paßt sich die Öffnung dieser Blende 17 dem augenblicklich gegebenen Durchmesser des einlaufenden Dornes 10 und dem Durchmesser des entsprechend erweiterten Kabeleinführungsstutzens 3' an. Schematisch wird dies in Figur 5 dadurch dargestellt, daß die Blende 17 der Pfeilrichtung 18 folgend in einen Führungsschlitz 19 des Gegenlagers 13 einläuft. Bei einem derartigen Aufweitungsverfahren wird somit ebenfalls die Verschiebung eines Kabeleinführungsstutzens in axialer Richtung verhindert.

**Ansprüche**

1. Muffenkopf (1) aus schrumpfbarem Material für den seitlichen Abschluß von Kabelmuffen mit als Kabeleinführungsstutzen (3, 5 bzw. 3', 5') ausgebildeten Kabeleinführungsöffnungen (2), wobei die Kabeleinführungsstutzen (3, 5 bzw. 3', 5') jeweils eine Trennfuge (4) entlang einer Mantellinie aufweisen, dadurch gekennzeichnet, daß die Kabeleinführungsstutzen (3, 5 bzw. 3', 5') vor dem Schrumpfen in radialer Richtung von der Trennfuge (4) ausgehend und kontinuierlich zunehmend so aufgeweitet sind, daß die längs beliebiger Mantellinien der · Kabeleinführungsstutzen (3, 5 bzw. 3', 5') befindlichen Flächenteile nahezu keine axialen Verschiebungen gegenüber dem ungeweiteten Zustand aufweisen und daß die Stirnfläche (7) des Muffenkopfes (1) eine durch die Aufweitung bewirkte Auffaltung (7') aufweist.

2. Verfahren zur Herstellung eines Muffenkopfes (1) nach Anspruch 1, dadurch gekennzeichnet, daß der Muffenkopf (1) über einer Aussparung (15) angeordnet wird, wobei die Aussparung (15) so groß gewählt ist, daß eine Verformung der Stirnfläche (7) ungehindert erfolgen kann, daß die einseitige, in radialer Richtung von der Trennfuge (4) ausgehende Aufweitung der Kabeleinführungsstutzen durch Einführung eines einseitig kegelförmig ausgebildeten Dornes (10) in die Kabeleinführungsöffnungen (2) erfolgt, wobei der Dorn (10) auf der zu weitenden Seite zusätzlich vom Ende her in seinem Durchmesser zunimmt und daß der Dorn (10) auf Mitteln (8, 11) zur Verhinderung der Reibkraftübertragung geführt wird.

3. Verfahren nach Anspruch 2, dadurch gekennzeichnet, daß die Mittel als gleitfähige Fäden (11) entlang der Innenwandung der Kabeleinführungsstutzen ausgebildet sind.

4. Verfahren nach Anspruch 2, dadurch gekennzeichnet, daß die Mittel als ein entfernbares Lamellensystem (8) entlang der Innenwandung der Kabeleinführungsstutzen ausgebildet sind.

5. Verfahren zur Herstellung eines Muffenkopfes (1) nach Anspruch 1, dadurch gekennzeichnet, daß der Muffenkopf (1) mit seinem Stutzenrand an einer verstellbaren Blende (17) als Anschlag angeordnet ist, daß die einseitige, in radialer Richtung von der Trennfuge (4) ausgehende Aufweitung der Kabeleinführungsstutzen durch Einführung eines einseitig kegelförmig ausgebildeten Dornes (10) in die Kabeleinführungsöffnungen (2) erfolgt, wobei der Dorn (10) auf der zu weitenden Seite zusätzlich vom Ende her in seinem Durchmesser zunimmt, wobei die verstellbare Blende (17) an den Kabeleinführungsöffnungen (2) der Kabeleinführungsstutzen (3, 5) dem sich ändernden Durchmesser des einfahrenden Dornes (10) angepaßt wird, um eine axiale Verschiebung des Stutzens (3, 5) zu verhindern.

**Claims**

1. A sleeve head (1) made of a shrinkable material for the lateral closure of cable sleeves having cable inlet openings (2) designed as cable glands (3, 5 and 3', 5'), wherein the cable glands (3, 5 and 3', 5') respectively have a line of separation (4) along a surface line, characterised in that, prior to the shrinking, starting from the line of separation (4) in the radial direction, the cable glands (3, 5 and 3', 5') are so widened in a continuously increasing manner that the surface areas existing along any surface lines of the cable glands (3, 5 and 3', 5'), display virtually no axial displacement as compared with the unwidened state, and that the end surface (7) of the sleeve head (1) is folded (7') as a result of the widening.

2. A process for the production of a sleeve head (1) according to Claim 1, characterised in that the sleeve head (1) is arranged above an aperture (15) which is selected to be so large that a deformation of the end face (7) can be effected without hindrance ; that the one-sided widening of the cable glands which starts from the line of separation (4) in the radial direction, is effected by inserting a unilaterally conical mandrel (10) into the cable inlet opening (2), the mandrel (10) additionally increasing in diameter from the end on the side to be widened ; and that the mandrel (10) is guided on means (8, 11) for hindering the transmission of frictional force.

3. A process according to Claim 2, characterised in that the means are in the form of threads (11) which are capable of sliding, along the inner wall of the cable glands.

4. A process according to Claim 2, characterised in that the means are in the form of a removable vane system (8) along the inner wall of the cable glands.

5. A process for the production of a sleeve head (1) according to Claim 1, characterised in that the sleeve head (1) has its gland edge arranged as a stop on an adjustable shutter (17) ; that the unilateral widening of the cable glands which starts from the separating line (4) in the radial direction, is effected by inserting a unilaterally conical mandrel (10) into the cable inlet openings (2), the mandrel (10) additionally increasing in diameter from its end on the side to be widened, and the adjustable shutter (17) on the cable inlet openings (2) of the cable glands (3, 5) being matched to the changing diameter of the entering mandrel (10) so as to avoid an axial displacement of the gland (3, 5).

**Revendications**

1. Tête de manchon (1) constituée en un matériau rétractable pour la fermeture latérale de manchons de câble comportant des ouvertures (2) d'introduction de câbles, réalisées sous la forme d'embouts (3, 5 ou 3', 5') d'introduction de câbles, qui possèdent chacun un joint de séparation (14) le long d'une génératrice, caractérisée par le fait que les embouts (3, 5 ou 3', 5') d'introduction des câbles sont élargis avant le rétrécissement suivant la direction radiale à partir du joint de séparation (4) et ce avec un élargissement augmentant de façon continue de telle sorte que les éléments de surface situés le long de génératrices quelconques des embouts (3, 5 ou 3', 5') d'introduction de câbles ne présentent approximativement aucun décalage axial par rapport à l'état non élargi et que la surface frontale (7) de la tête de manchon (1) possède une forme bombée (7') provoquée par l'élargissement.

2. Procédé pour fabriquer une tête de manchon (1) suivant la revendication 1, caractérisé par le fait qu'on dispose la tête de manchon (1) au-dessus d'une ouverture (15) dont les dimensions sont choisies de telle sorte qu'une déformation de la surface frontale (7) puisse se produire sans aucune gêne, qu'on réalise l'élargissement unilatéral, s'étendant suivant la direction radiale à partir du joint de séparation (4), des embouts d'introduction de câbles moyennant l'introduction d'un mandrin (10), réalisé sur un côté avec une forme conique, dans les ouvertures (2) d'introduction des câbles, le diamètre du mandrin (10) augmentant, en plus à partir de son extrémité, sur le côté devant être élargi, et que le mandrin (10) est guidé dans des moyens (8, 11) servant à empêcher la transmission d'une force de friction.

3. Procédé suivant la revendication 2, caractérisé par le fait que les moyens sont réalisés, sous la forme de fils glissants (11), le long de la paroi intérieure des embouts d'introduction de câbles.

4. Procédé suivant la revendication 2, caractérisé par le fait que les moyens sont réalisés sous la forme d'un systène à lamelles (8) amovible, le long de la paroi intérieure des embouts d'introduction des câbles.

5. Procédé pour fabriquer une tête de manchon (1) suivant la revendication 1, caractérisé par le fait qu'on dispose la tête de manchon (1) par le bord de ses embouts contre un diaphragme réglable (17) servant de butée, qu'on réalise l'élargissement unilatéral, s'étendant suivant la direction radiale à partir du joint de séparation (4), des embouts d'introduction de câbles moyennant l'introduction d'un mandrin (10) réalisé d'un côté avec une forme conique dans les ouvertures (2) d'introduction des câbles, le diamètre du mandrin (10) augmentant, en plus, à partir de son extrémité sur le côté devant être élargi, tandis que le diaphragme réglable (17) est adapté, au niveau des ouvertures (2) d'introduction de câbles des embouts (3, 5) d'introduction de câbles, au diamètre variable du mandrin qui pénètre (10), afin d'empêcher un décalage axial des embouts (3, 5).

0 035 179

FIG 1

FIG 2

FIG 3

FIG 4

# FIG 5